# EUROPEAN PATENT SPECIFICATION

(11) **EP 2 083 311 B1**
(45) Date of publication and mention of the grant of the patent: **23.04.2014**
(21) Application number: 09000964.8
(22) Date of filing: 23.01.2009
(51) Int. Cl.: G02B 27/10, G02B 27/14, G02B 7/02, G02B 7/18, G03B 21/14, H04N 9/31, G02B 7/00

(54) **Projector emitting laser light of multiple colors and optical axis adjusting method for the projector**
Projektor, der Mehrfarben-Laserlicht aussendet und Verfahren zum Einstellen der optischen Achse des Projektors
Projecteur émettant une lumière laser de plusieurs couleurs et procédé de réglage d'axe optique pour le projecteur

(30) Priority: 24.01.2008 JP 2008013834
(43) Date of publication of application: 29.07.2009
(73) Proprietor: Funai Electric Co., Ltd., Daito-shi, Osaka 574-0013 (JP)
(72) Inventor: Takahashi, Yutaka, Daito-shi Osaka 574-0013 (JP); Matsubara, Hiroki, Daito-shi Osaka 574-0013 (JP); Nishigaki, Hiroshi, Daito-shi Osaka 574-0013 (JP); Murayama, Manabu, Daito-shi Osaka 574-0013 (JP)
(74) Representative: Grünecker, Kinkeldey, Stockmair & Schwanhäusser

(56) References cited:
- WO-A-2006/088735
- JP-A- 2001 242 311
- US-A1- 2005 174 658
- US-A1- 2006 126 178
- US-A1- 2007 132 962

## Description

### BACKGROUND OF THE INVENTION

### Field of the Invention

The invention relates to a projector and an optical axis adjusting method for the projector, and particularly to a projector emitting laser light of multiple colors and an optical axis adjusting method for the projector.

### Description of the Background Art

Various techniques have been proposed for reducing sizes of a projector.

For example, Japanese Patent Gazette No. 2006-527392 has disclosed a projector integrally having a light source chip and an optically transparent beam-forming element that substantially surrounds a hemispherical area around the light source chip.

Japanese Patent Laying-Open No. 2005-208183 has disclosed a projector that leads light fluxes emitted from LED (Light Emitting Diode) light sources of three (i.e., RGB) colors to a light pipe after combining these light fluxes by color combining means, leads the light from the light pipe to an image display element arranged substantially in intimate contact with the light pipe, and projects image light emitted from image display element through a projection lens magnifying an image. The light pipe is integral with an optical casing that is a structure holding a plurality of optical elements including the color combining means and the image display element.

Japanese Patent Laying-Open No. 2005-309286 has disclosed a projector that includes a reactive element and a modulation unit modulating an electromagnetic wave emitted from the reactive element on a pixel-by-pixel basis. The reactive element and the modulation unit are fixed together by an optically transparent adhesive.

However, the techniques disclosed in the foregoing three publications cannot overcome the following problem.

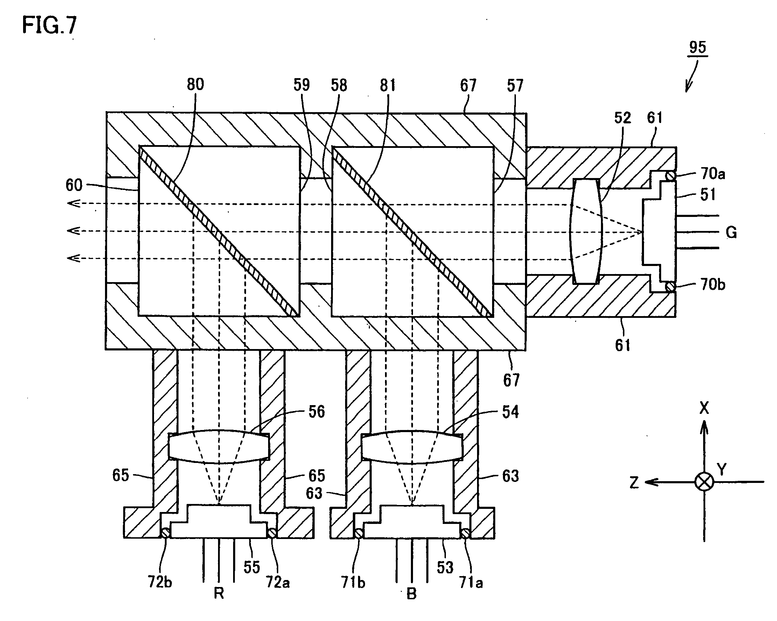

Fig. 7 shows a structure of a conventional laser output unit.

Referring to Fig. 7, a prism holder 67 fixes prisms 57, 58, 59 and 60. A lens holder 61 fixes a collimate lens 52, and is adhered to prism holder 67. A lens holder 63 fixes a collimate lens 54, and is adhered to prism holder 67. A lens holder 65 fixes a collimate lens 56, and is adhered to prism holder 67.

Prism 58 is provided on its one surface with a thin film 81 reflecting only blue laser light. Prism 60 is provided on its one surface with a thin film 80 reflecting only red laser light.

A green laser light source 51 emits green laser light in a Z-axis direction. A blue laser light source 53 emits the blue laser light in an X-axis direction. A red laser light source 55 emits the red laser light in the X-axis direction.

It is necessary to match optical axes of green, blue and red laser light fluxes together, and this matching is performed as follows.

Green laser light source 51 is moved in the X- and Y-axis directions, and blue laser light source 53 is moved in the Z- and Y-axis directions. Thereby, a matching position where the optical axis of the light flux of the green laser light matches that of the blue laser light is found. In this matching position, green laser light source 51 is fixed to lens holder 61 by adhesives 70a, 70b and 70c (not shown), and blue laser light source 53 is fixed to lens holder 63 by adhesives 71a, 71b and 71c (not shown).

Then, red laser light source 55 is moved in the Z- and Y-axis directions to find a matching position where the optical axes of the light fluxes of the blue and green laser lights match that of the red laser light. In this matching position, red laser light source 55 is fixed to lens holder 65 by adhesives 72a, 72b and 72c (not shown).

Since the light source and the lens holder are fixed together by the adhesive in a three-point contact fashion, shrinkage on curing may occur in the adhesives due to a temperature or the like, and this may displace the optical axes of the laser light fluxes of multiple colors that were adjusted to match together.

Fig. 8A shows a state of adhesion of green laser light source 51 to lens holder 61 in an initial state attained after the optical axes of the laser output unit in Fig. 7 were adjusted.

Fig. 8B shows the state of adhesion of green laser light source 51 to lens holder 61 attained after elapsing of a certain period since the optical axis adjustment of the laser output unit in Fig. 7 was performed.

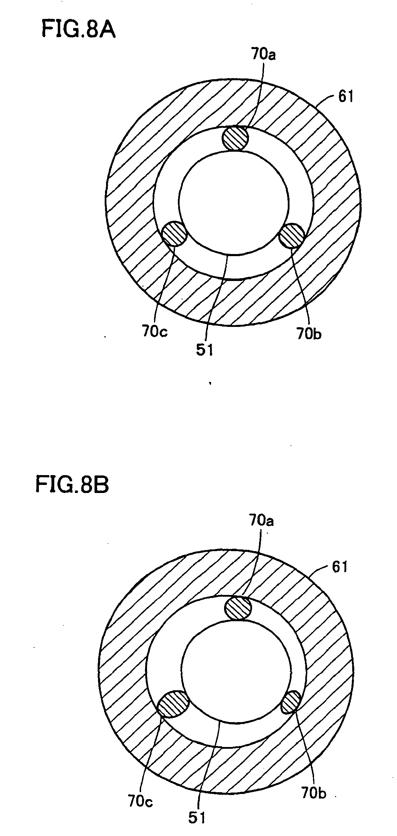

As shown in Fig. 8B, adhesive 70b undergoes shrinkage on curing due to the temperature or the like so that adhesive 70c is pulled to expand. Consequently, the optical axis of the light flux of the green laser light that was located in the matching position by the optical axis adjustment is displaced from those of the red and blue laser light fluxes.

### SUMMARY OF THE INVENTION

An object of the invention is to provide a projector that can keep a state in which optical axes of light fluxes of laser light of multiple colors match together, as well as an optical axis adjusting method of the light fluxes of the laser light of the multiple colors.

The invention provides a projector projecting laser light of a first color, a second color and a third color, and including a first light output unit integrally having a first light source emitting the laser light of the first color in a first direction, and a first prism receiving the laser light of the first color emitted from the first light source; a second light output unit integrally having a second light source emitting the laser light of the second color in a second direction perpendicular to the first direction, and a second prism receiving the laser light of the second color emitted from the second light source; and a third light output unit integrally having a third light source emitting the laser light of the third color in the second direction, and a third prism receiving the laser light of the third color emitted from the third light source. A first surface being one of surfaces of the first prism receiving the laser light of the first color and being remoter from the first light source than the other surface is parallel to a third direction perpendicular the first and second directions, and forms an angle of 45 degrees with respect to the first and second directions. A second surface being one of surfaces of the second prism receiving the laser light of the second color and being remoter from the second light source than the other surface is parallel to the third direction, and forms an angle of 45 degrees with respect to the first and second directions. A third surface of the second prism opposed to the second surface is parallel to the third direction, and forms an angle of 45 degrees with respect to the first and second directions. A fourth surface being one of surfaces of the third prism receiving the laser light of the third color and being remoter from the third light source than the other surface is parallel to the third direction, and forms an angle of 45 degrees with respect to the first and second directions. The first and second surfaces are adhered together by an adhesive with a first film located therebetween, and the first film passes the laser light of the first color therethrough and reflects the laser light of the second color. The third and fourth surfaces are adhered together by an adhesive with a second film located therebetween, and the second film passes the laser light of the first color and the laser light of the second color therethrough and reflects the laser light of the third color.

Also, the invention provides an optical axis adjusting method for a projector projecting laser light of a first color, a second color and a third color. The projector includes a first optical unit integrally having a first light source emitting the laser light of the first color, and a first prism receiving the laser light of the first color emitted from the first light source; a second optical unit integrally having a second light source emitting the laser light of the second color, and a second prism receiving the laser light of the second color emitted from the second light source; and a third optical unit integrally having a third light source emitting the laser light of the third color, and a third prism receiving the laser light of the third color emitted from the third light source. A first surface being one of surfaces of the first prism receiving the laser light of the first color and being remoter from the first light source than the other surface forms an angle of 45 degrees with respect to an emission direction of the laser light of the first color. A second surface being one of surfaces of the second prism receiving the laser light of the second color and being remoter from the second light source than the other surface forms an angle of 45 degrees with respect to an emission direction of the laser light of the second color. A third surface of the second prism opposed to the second surface forms an angle of 45 degrees with respect to the emission direction of the laser light of the second color. A fourth surface being one of surfaces of the third prism receiving the laser light of the third color and being remoter from the third light source than the other surface forms an angle of 45 degrees with respect to an emission direction of the laser light of the third color. A first thin film passing the laser light of the first color therethrough and reflecting the laser light of the second color is formed on the first surface or the second surface. A second thin film passing the laser light of the first color and the laser light of the second color therethrough and reflecting the laser light of the third color is formed on the third surface or the fourth surface. The optical axis adjusting method includes a step of applying a first UV curable adhesive between the first surface of the first prism and the first thin film, or between the second surface of the second prism and the first thin film; a step of sliding the first and second prisms relatively to each other while keeping the first and second prisms in contact with each other with the first thin film and the first UV curable adhesive located therebetween, and irradiating the first UV curable adhesive with ultraviolet rays when an axis of the laser light of the first color matches an axis of the laser light of the second color; a step of applying a second UV curable adhesive between the third surface of the second prism and the second thin film, or between the fourth surface of the third prism and the second thin film; and a step of sliding the second and third prisms relatively to each other while keeping the second and third prisms in contact with each other with the second thin film and the second UV curable adhesive located therebetween, and irradiating the second UV curable adhesive with ultraviolet rays when the axis of the laser light of the first color and the axis of the laser light of the second color match an axis of the laser light of the third color.

According to the projector and the optical axis adjusting method for the projector can keep a state in which the optical axes of the light fluxes of the laser light of the multiple colors match together.

The foregoing and other objects, features, aspects and advantages of the present invention will become more apparent from the following detailed description of the present invention when taken in conjunction with the accompanying drawings.

### BRIEF DESCRIPTION OF THE DRAWINGS

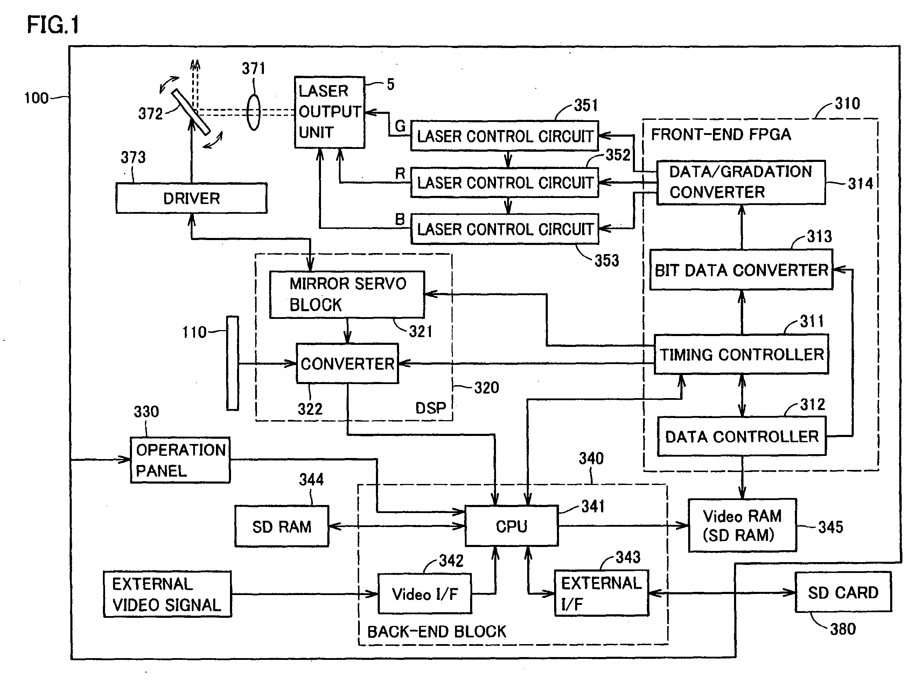

Fig. 1 shows a structure of a projector of an embodiment of the invention.

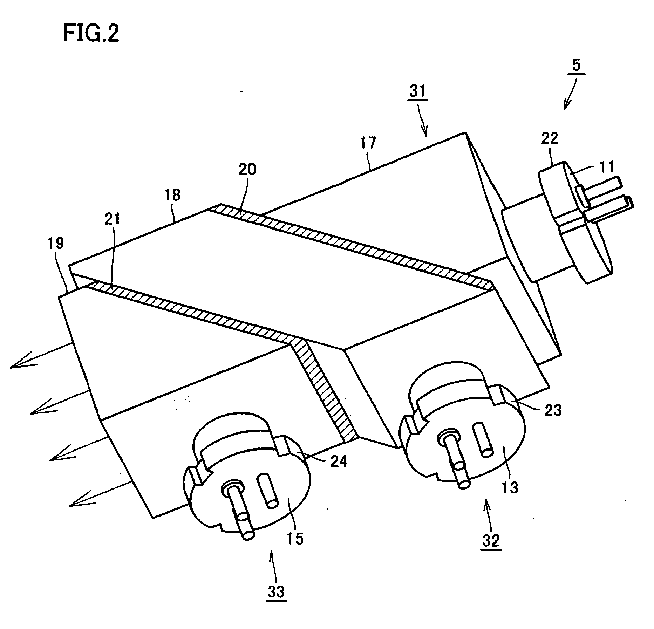

Fig. 2 shows an outer appearance of a laser output unit in Fig. 1.

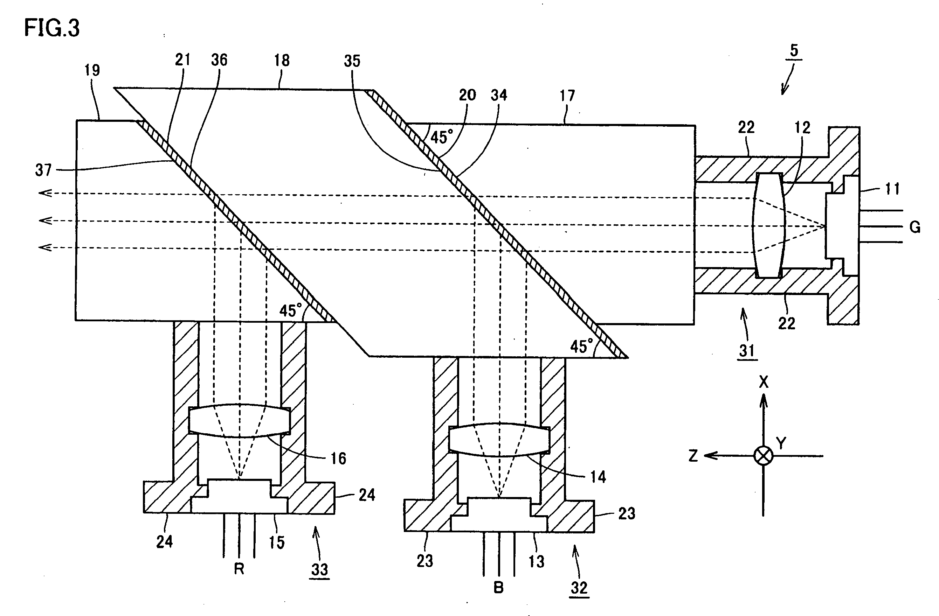

Fig. 3 is a cross section of a laser output unit in Fig. 2.

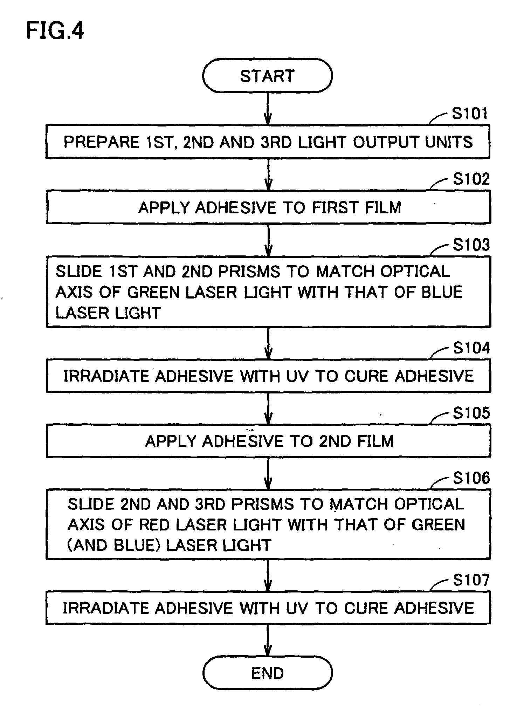

Fig. 4 is a flowchart illustrating steps of an optical axis adjusting method of matching optical axes of laser light fluxes of three colors together.

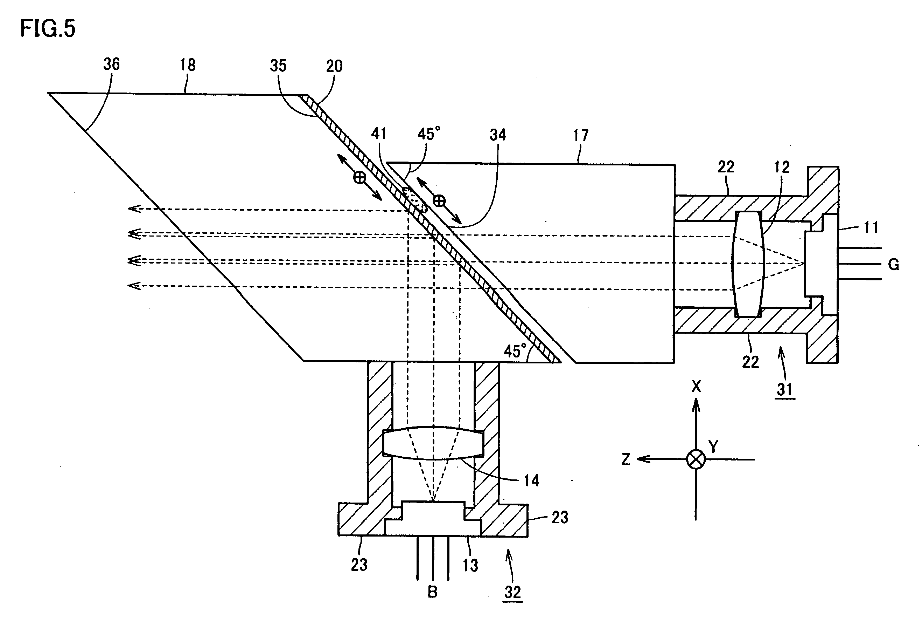

Fig. 5 illustrates steps S 101 - S013 in Fig. 4.

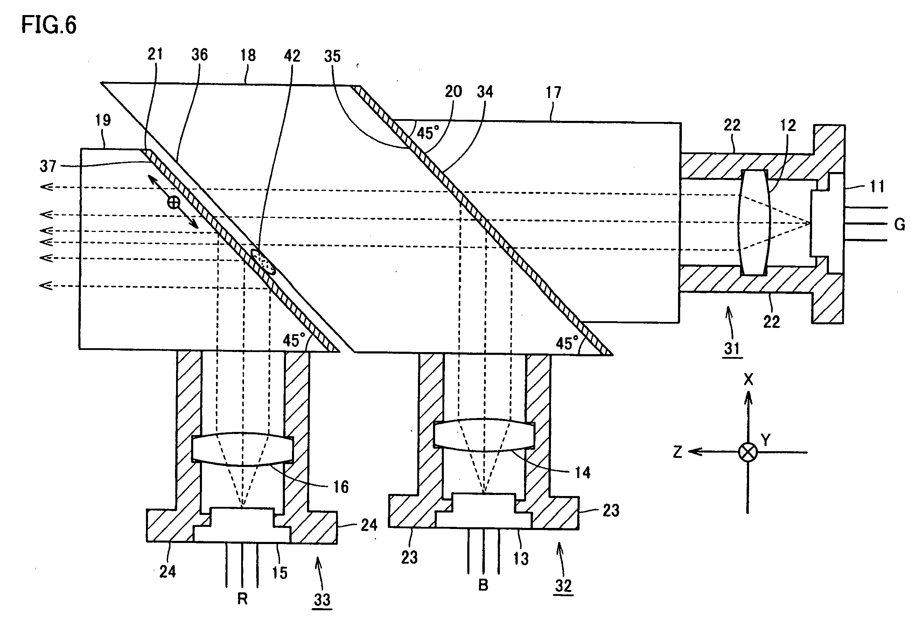

Fig. 6 illustrates steps S104 - S 106 in Fig. 4.
Fig. 7 shows a structure of a conventional laser output unit.
Fig. 8A shows a state where a green laser light source is adhered to a lens holder in an initial state attained after optical axis adjustment of the laser output unit in Fig. 7, and Fig. 8B shows a state of adhesion of the green laser light source to the lens holder attained after elapsing of a certain period since the optical axis adjustment of the laser output unit in Fig. 7 was performed.

### DESCRIPTION OF THE PREFERRED EMBODIMENTS

An embodiment of the invention will be described below with reference to the drawings.

### (Structure)

Fig. 1 shows a structure of a projector of the embodiment of the invention.

Referring to Fig. 1, a projector 100 includes a front-end FPGA (Field Programmable Gate Array) 310, a digital signal processor 320, an operation panel 330, a back-end block 340, an SDRAM (Synchronous Dynamic Random Access Memory) 344, a video RAM (Random Access Memory) 345, laser control circuits 351, 352 and 353, a laser output unit 5, a galvanometer mirror 372 and a driver 373. Driver 373 includes, for example, a driver motor, a coil or the like.

Front-end FPGA 310 includes a data/gradation converter 314, a timing controller 311, a data controller 312, and a bit data converter 313. Digital signal processor 320 includes a mirror servo block 321 and a converter 322.

Operation panel 330 is arranged on a front surface or side surface of a casing of projector 100. Operation panel 330 includes, for example, a display device (not shown) that displays details of operations as well as switches (e.g., plus/minus buttons) that accept an operation input for projector 100. When operation panel 330 accepts an operation, operation panel 330 sends out a signal according to the operation to a CPU (Central Processing Unit) 341 of back-end block 340.

An image signal provided from an external source of projector 100 is inputted to a video interface 342. In one aspect, projector 100 includes an external interface 343. External interface 343 accepts, for example, loading of an SD (Secure Digital) card 380. External interface 343 reads data from SD card 380 and the data is stored in SDRAM 344 or video RAM 345.

CPU 341 controls projection of images obtained based on signals inputted to projector 100 through external video interface 342 or external interface 343, based on an operation input provided to operation panel 330. More specifically, by CPU 341 performing mutual communication with timing controller 311 of front-end FPGA 310, CPU 341 controls display of images obtained based on image data that is temporarily stored in video RAM 345.

In front-end FPGA 310, timing controller 311 reads data stored in video RAM 345 through data controller 312 based on an instruction sent from CPU 341. Data controller 312 sends out the read data to bit data converter 313. Bit data converter 313 sends out the data to data/gradation converter 314 based on an instruction from timing controller 311. Bit data converter 313 converts image data provided from an external source, into a format that conforms to a format for projection by the laser light emission.

Data/gradation converter 314 converts the data outputted from bit data converter 313, into color gradation for displaying the data as three colors of G, R, and B and sends out the converted data to laser control circuits 351, 352, and 353.

On the other hand, timing controller 311 controls drive of two-axis galvanometer mirror 372 with digital signal processor 320. More specifically, timing controller 311 sends out an instruction to mirror servo block 321 to drive driver 373. In response to the instruction, driver 373 changes the position and tilt of two-axis galvanometer mirror 372.

Converter 322 performs A/D (Analog to Digital) conversion of a signal sent from a CCD (Charge Coupled Device) sensor 110, based on a signal sent from timing controller 311 and sends out digital data obtained by the conversion to CPU 341. For example, when CCD sensor 110 shoots a subject present within a shootable range thereof, an image signal of the subject is sent to CPU 341. When a setting for displaying an image shot by CCD sensor 110 is valid, CPU 341 sends an instruction to timing controller 311 to display an image based on data corresponding to the image signal.

Also, converter 322 transmits a signal sent from mirror servo block 321, to CPU 341. For example, converter 322 generates a signal including an instruction provided to driver 373 and a state of driver 373, and sends out the signal to CPU 341.

Laser control circuits 351-353 control drive of laser output unit 5 based on a signal sent from data/gradation converter 314.

The laser light is collected in a certain area through a lens 371 and is reflected by two-axis galvanometer mirror 372. The reflected light is projected outside by projector 100. At this time, two-axis galvanometer mirror 372 changes the tilt thereof by drive of driver 373.

Fig. 2 shows an outer appearance of laser output unit 5 in Fig. 1. Fig. 3 is a cross section of laser output unit 5.

Referring to Figs. 2 and 3, X-, Y- and Z-axes are perpendicular to each other. The X-axis extends in the longitudinal direction of the sheet of Fig. 3, the Z-axis extends in the lateral direction of the sheet and the Y-axis extends perpendicularly to the sheet.

Laser output unit 5 includes first, second and third light output units 31, 32 and 33.

First light output unit 31 integrally has a first light source 11, a first collimate lens 12 and a first prism 17. More specifically, a first holder 22 fixes first light source 11 and first collimate lens 12 together. First holder 22 and first light source 11 are in surface-contact with each other, and contact surfaces thereof are adhered together by an adhesive. First holder 22 and first collimate lens 12 are in surface-contact with each other, and contact surfaces thereof are adhered together by an adhesive. First prism 17 has two surfaces receiving the green laser light. One of the two surfaces is in surface-contact with neighboring first holder 22, and contact surfaces thereof are adhered together by an adhesive.

First light source 11 emits the green laser light in the Z-axis direction. First collimate lens 12 collimates the green laser light emitted from first light source 11.

First prism 17 receives the green laser light that is emitted from first light source 11 and is collimated by first collimate lens 12.

A first surface 34 is the other of the two surfaces of first prism 17 receiving the green laser light, and is located on the remoter or downstream side. This first surface 34 is parallel to the Y-axis. First surface 34 forms an angle of 45 degrees with respect to each of the X- and Z-axes. Thus, first surface 34 is parallel to an axis which is obtained by rotating the X-axis counterclockwise by 45 degrees.

Second light output unit 32 integrally has a second light source 13, a second collimate lens 14 and a second prism 18. More specifically, a second holder 23 fixes second light source 13 and second collimate lens 14 together. Second holder 23 and second light source 13 are in surface-contact with each other, and contact surfaces thereof are adhered together by an adhesive. Second holder 23 and second collimate lens 14 are in surface-contact with each other, and contact surfaces thereof are adhered together by an adhesive. Second prism 18 has two surfaces receiving the blue laser light. One of the two surfaces is in surface-contact with neighboring second holder 23, and contact surfaces thereof are adhered together by an adhesive.

Second light source 13 emits the blue laser light in the X-axis direction. Second collimate lens 14 collimates the blue laser light emitted from second light source 13.

Second prism 18 receives the blue laser light that is emitted from second light source 13 and is collimated by second collimate lens 14.

A second surface 3 that is one of the two surfaces of second prism 18 receiving the blue laser light, and is located on the remoter side. This second surface 35 is parallel to the Y-axis. Second surface 35 forms an angle of 45 degrees with respect to each of the X- and Z-axes. Thus, second surface 35 is parallel to the axis which is obtained by rotating the X-axis counterclockwise by 45 degrees.

A third surface 36 of second prism 18 opposed to second surface 35 is parallel to the Y-axis. Third surface 36 forms an angle of 45 degrees with respect to each of the X- and Z-axes. Thus, third surface 36 is parallel to the axis which is obtained by rotating X-axis counterclockwise by 45 degrees.

Third light output unit 33 integrally has a third light source 15, a third collimate lens 16 and a third prism 19. More specifically, a third holder 24 fixes third light source 15 and third collimate lens 16 together. Third holder 24 and third light source 15 are in surface-contact with each other, and contact surfaces thereof are adhered together by an adhesive. Third holder 24 and third collimate lens 16 are in surface-contact with each other, and contact surfaces thereof are adhered together by an adhesive. Third prism 19 has two surfaces receiving the red laser light. One of the two surfaces is in surface-contact with neighboring third holder 24, and contact surfaces thereof are adhered together by an adhesive.

Third light source 15 emits the red laser light in the X-axis direction. Third collimate lens 16 collimates the red laser light emitted from third light source 15.

Third prism 19 receives the red laser light that is emitted from third light source 15 and is collimated by third collimate lens 16.

A fourth surface 37 is one of the two surfaces of third prism 19 receiving the red laser light, and is located on the remoter side. This fourth surface 37 is parallel to the Y-axis. Fourth surface 37 forms an angle of 45 degrees with respect to each of the X-and Z-axes. Thus, fourth surface 37 is parallel to the axis which is obtained by rotating the X-axis counterclockwise by 45 degrees.

A first thin film 20 reflecting only the blue light is formed over second surface 35 of second prism 18. A second thin film 21 reflecting only the red light is formed over fourth surface 37 of third prism 19.

The green laser light emitted in the Z-axis direction from first light source 11 passes through first and second thin films 20 and 21. The blue laser light emitted in the X-axis direction from second light source 13 is reflected by first thin film 20 to travel in the Z-axis direction, and passes through second thin film 21. The red laser light emitted in the X-axis direction from third light source 15 is reflected by second thin film 21 to travel in the Z-axis direction.

First surface 34 of first prism 17 is adhered by a UV curable adhesive to first thin film 20 formed on second surface 35 of second prism 18. These are adhered together in such a position that an optical axis of the light flux of the green laser light emitted from first light source 11 matches the optical axis of the light flux of the blue laser light that is emitted from second light source 13 and is reflected by first thin film 20.

Third surface 36 of second prism 18 is adhered by a UV curable adhesive to second thin film 21 formed on fourth surface 37 of third prism 19. These are adhered together in such a position that an optical axis of the light flux of the green laser light emitted from first light source 11 and an optical axis of the light flux of the blue laser light emitted from second light source 13 and reflected by first thin film 20 match the optical axis of the light flux of the red laser light that is emitted from third light source 15 and is reflected by second thin film 21.

### (Optical Axis Adjusting Method)

Fig. 4 is a flowchart illustrating steps of an optical axis adjusting method for matching the optical axes of the light fluxes of the laser light of three colors together.
Fig. 5 illustrates steps S101 - S103 in Fig. 4.
Fig. 6 illustrates steps S104 - S 106 in Fig. 4.

Referring to Figs. 4, 5 and 6, first, second and third light output units 31, 32 and 33 are prepared (step S101).

Then, a first UV curable adhesive 41 is applied to first thin film 20 formed on second surface 35 of second prism 18 of second light output unit 32 (step S102).

Then, first and second prisms 17 and 18 are two-dimensionally slid relatively to each other while keeping first surface 34 of first prism 17 of first light output unit 31 in contact with first thin film 20, and a position where the optical axes of the light fluxes of the green laser light and blue laser light match together is found (step S 103).

Then, first UV curable adhesive 41 is irradiated with ultraviolet rays while keeping the optical axes of the light fluxes of the green laser light and the blue laser light in the matching position. Thereby, first thin film 20 is adhered to first prism 17 so that first and second light output units 31 and 32 are adhered together (step S104).

Then, a second UV curable adhesive 42 is applied to second thin film 21 formed on fourth surface 37 of third prism 19 of third light output unit 3 3 (step S105).

Then, second and third prisms 18 and 19 are two-dimensionally slid relatively to each other while keeping third surface 36 of second prism 18 of second light output unit 32 in contact with second thin film 21, and a position where the optical axes of the light fluxes of the green and blue laser light match the optical axis of the light flux of the red laser light is found (step S 106).

Then, UV curable adhesive 42 is irradiated with ultraviolet rays while keeping the optical axes of the light fluxes of the green and blue laser light and the optical axis of the light flux of the red laser light in the matching position. Thereby, second thin film 21 is adhered to second prism 18 so that second and third light output units 32 and 33 are adhered together (step S107).

According to the embodiment of the invention, as described above, after such a state is set that the optical axes of the light fluxes of laser light of multiple colors match together, the adhesives for fixing the positions are applied to the portions or areas where members to be adhered are in surface-contact with each other, in contrast to the prior art applying the adhesive to portions where such members are in point-contact with each other. Therefore, even when shrinkage on curing occurs in the adhesive due to the temperature or the like, the positions of the adhered members do not change, and the optical axes already adjusted to match together are not displaced from each other.

### (Modification)

The invention is not restricted to the above embodiment, and includes, e.g., a modification described below.

### (1) Thin film and UV curable adhesive

In the embodiment of the invention, first thin film 20 is formed on second surface 35 of second prism 18. However, this is not restrictive, and first thin film 20 may be formed on first surface 34 of first prism 17.

Likewise, second thin film 21 is formed on fourth surface 37 of third prism 19 in the embodiment of the invention. However, this is not restrictive, and second thin film 21 may be formed on third surface 36 of second prism 18.

Although UV curable adhesive 41 is applied to first thin film 20, this is not restrictive, and it may be applied to first surface 34. When first thin film 20 is formed on first surface 34, UV curable adhesive 41 may be applied to second surface 35.

Although UV curable adhesive 42 is applied to second thin film 21, this is not restrictive, and it may be applied to third surface 36. When second thin film 21 is formed on third surface 36, UV curable adhesive 42 may be applied to fourth surface 37.

Although the present invention has been described and illustrated in detail, it is clearly understood that the same is by way of illustration and example only and is not to be taken by way of limitation, the scope of the present invention being interpreted by the terms of the appended claims.

## Claims

1. A projector (5) projecting laser light of a first color (G), a second color (B) and a third color (R), and comprising:
a first light output unit (31) integrally having a first light source (11) emitting the laser light of said first color (G) in a first direction, and a first prism (17) receiving the laser light of the first color (G) emitted from said first light source (11), wherein a first holder (22) and the first light source (11) are in surface-contact with each other, and contact surfaces thereof are adhered together by an adhesive;
a second light output unit (32) integrally having a second light source (13) emitting the laser light of said second color (B) in a second direction perpendicular to the first direction, and a second prism (18) receiving the laser light of the second color (B) emitted from said second light source (13), wherein a second holder (23) and the second light source (13) are in surface-contact with each other, and contact surfaces thereof are adhered together by an adhesive; and
a third light output unit (33) integrally having a third light source (15) emitting the laser light of said third color (R) in the second direction, and a third prism (19) receiving the laser light of the third color (R) emitted from said third light source (15), wherein a third holder (24) and the third light source (15) are in surface-contact with each other, and contact surfaces thereof are adhered together by an adhesive; wherein
a first surface (34) being one of surfaces of said first prism (17) receiving the laser light of said first color (G) and being remoter from said first light source (11) than the other surface is parallel to a third direction perpendicular said first and second directions, and forms an angle of 45 degrees with respect to said first and second directions, wherein the other surface of the first prism (17) is in surface-contact with the first holder (22) and contact surfaces thereof are adhered together by an adhesive,
a second surface (35) being one of surfaces of said second prism (18) receiving the laser light of said second color (B) and being remoter from said second light source (13) than the other surface is parallel to said third direction, and forms an angle of 45 degrees with respect to said first and second directions, wherein the other surface of the second prism (18) is in surface-contact with the second holder (23) and contact surfaces thereof are adhered together by an adhesive,
a third surface (36) of said second prism (18) opposed to said second surface (35) is parallel to said third direction, and forms an angle of 45 degrees with respect to said first and second directions,
a fourth surface (37) being one of surfaces of said third prism (19) receiving the laser light of said third color (R) and being remoter from said third light source (15) than the other surface is parallel to said third direction, and forms an angle of 45 degrees with respect to said first and second directions, wherein the other surface of the third prism (19) is in surface-contact with the third holder (24) and contact surfaces thereof are adhered together by an adhesive,
said first or second surface (34, 35) is adhered by an adhesive to a first thin film (20) formed on said second or first surface,
and said first film (20) passes the laser light of said first color (G) therethrough and reflects the laser light of said second color (B), and
said third or fourth surface (36, 37) is adhered by an adhesive to a second thin film (21) formed on said fourth or third surface,
and said second film (21) passes the laser light of said first color (G) and the laser light of said second color (B) therethrough and reflects the laser light of said third color (R),
wherein said first or second surface (34, 35) is adhered by an adhesive to said first thin film (20) in such a position that an axis of the laser light of said first color (G) matches an axis of the laser light of said second color (B); and
wherein said third or fourth surface (36, 37) is adhered by an adhesive to said second thin film (21) in such a position that the axis of the laser light of said first color (G) and the axis of the laser light of said second color (B) match an axis of the laser light of said third color (R).

2. An optical axis adjusting method for a projector projecting laser light of a first color (G), a second color (B) and a third color (R), wherein
said projector (5) includes:
a first optical unit (31) integrally having a first light source (11) emitting the laser light of said first color (G), and a first prism (17) receiving the laser light of the first color (G) emitted from said first light source (11), wherein a first holder (22) and the first light source (11) are in surface-contact with each other, and contact surfaces thereof are adhered together by an adhesive;
a second optical unit (32) integrally having a second light source (13) emitting the laser light of said second color (B), and a second prism (18) receiving the laser light of the second color (B) emitted from said second light source (13), wherein a second holder (23) and the second light source (13) are in surface-contact with each other, and contact surfaces thereof are adhered together by an adhesive; and
a third optical unit (33) integrally having a third light source (15) emitting the laser light of said third color (R), and a third prism (19) receiving the laser light of the third color (R) emitted from said third light source (15), wherein a third holder (24) and the third light source (15) are in surface-contact with each other, and contact surfaces thereof are adhered together by an adhesive; wherein
a first surface (34) being one of surfaces of said first prism (17) receiving the laser light of said first color (G) and being remoter from said first light source (11) than the other surface forms an angle of 45 degrees with respect to an emission direction of the laser light of said first color (G), wherein the other surface of the first prism (17) is in surface-contact with the first holder (22) and contact surfaces thereof are adhered together by an adhesive,
a second surface (35) being one of surfaces of said second prism (18) receiving the laser light of said second color (B) and being remoter from said second light source (13) than the other surface forms an angle of 45 degrees with respect to an emission direction of the laser light of said second color (B), wherein the other surface of the second prism (18) is in surface-contact with the second holder (23) and contact surfaces thereof are adhered together by an adhesive,
a third surface (36) of said second prism (18) opposed to said second surface (35) forms an angle of 45 degrees with respect to the emission direction of the laser light of said second color (B),
a fourth surface (37) being one of surfaces of said third prism (19) receiving the laser light of said third color (R) and being remoter from said third light source (15) than the other surface forms an angle of 45 degrees with respect to an emission direction of the laser light of said third color (R), wherein the other surface of the third prism (19) is in surface-contact with the third holder (24) and contact surfaces thereof are adhered together by an adhesive,
a first thin film (20) passing the laser light of said first color (G) therethrough and reflecting the laser light of said second color (B) is formed on said first surface (34) or said second surface (35), and
a second thin film (21) passing the laser light of said first color (G) and the laser light of said second color (B) therethrough and reflecting the laser light of said third color (R) is formed on said third surface (36) or said fourth surface (37); and
said optical axis adjusting method comprises the steps of:
applying a first UV curable adhesive (41) between said first surface (34) of said first prism (17) and said first thin film (20), or between said second surface (35) of said second prism (18) and said first thin film (20);
sliding said first and second prisms (17, 18) relatively to each other while keeping said first and second prisms (17, 18) in contact with each other with said first thin film (20) and said first UV curable adhesive (41) located therebetween, and irradiating said first UV curable adhesive (41) with ultraviolet rays when an axis of the laser light of said first color (G) matches an axis of the laser light of said second color (B);
applying a second UV curable adhesive (42) between said third surface (36) of said second prism (18) and said second thin film (21), or between said fourth surface (37) of said third prism (19) and said second thin film (21); and
sliding said second and third prisms (18, 19) relatively to each other while keeping said second and third prisms (18, 19) in contact with each other with said second thin film (21) and said second UV curable adhesive (42) located therebetween, and irradiating said second UV curable adhesive (42) with ultraviolet rays when the axis of the laser light of said first color (G) and the axis of the laser light of said second color (B) match an axis of the laser light of said third color (R).

## Patentansprüche

1. Projektor (5), der Laserlicht einer ersten Farbe (G), einer zweiten Farbe (B) und einer dritten Farbe (R) projiziert und der umfasst:
eine erste Lichtausgabeeinheit (31), die integral eine erste Lichtquelle (11), die das Laserlicht der ersten Farbe (G) in einer ersten Richtung emittiert, und ein erstes Prisma (17) aufweist, das das von der ersten Lichtquelle (11) emittierte Laserlicht der ersten Farbe (G) empfängt, wobei ein erster Halter (22) und die erste Lichtquelle (11) in Flächenkontakt miteinander sind und Kontaktflächen derselben mit einem Klebstoff miteinander verklebt sind;
eine zweite Lichtausgabeeinheit (32), die integral eine zweite Lichtquelle (13), die das Laserlicht der zweiten Farbe (B) in einer zweiten Richtung senkrecht zu der ersten Richtung emittiert, und ein zweites Prisma (18) aufweist, das das von der zweiten Lichtquelle (B) emittierte Laserlicht der zweiten Farbe (B) empfängt, wobei ein zweiter Halter (23) und die zweite Lichtquelle (13) in Flächenkontakt miteinander sind und Kontaktflächen derselben mit einem Klebstoff miteinander verklebt sind; sowie
eine dritte Lichtausgabeeinheit (33), die integral eine dritte Lichtquelle (15), die das Laserlicht der dritten Farbe (R) in der zweiten Richtung emittiert, und ein drittes Prisma (19) aufweist, das das von der dritten Lichtquelle (15) emittierte Laserlicht der dritten Farbe (R) empfängt, wobei ein dritter Halter (24) und die dritte Lichtquelle (15) in Flächenkontakt miteinander sind und Kontaktflächen derselben mit einem Klebstoff miteinander verklebt sind; und wobei
eine erste Fläche (34), die eine der Flächen des ersten Prismas (17) ist, die das Laserlicht der ersten Farbe (G) empfängt und weiter von der ersten Lichtquelle (11) entfernt ist als die andere Fläche, parallel zu einer dritten Richtung senkrecht zu der ersten und der zweiten Richtung ist und einen Winkel von 45° in Bezug auf die erste und die zweite Richtung bildet, wobei die andere Fläche des ersten Prismas (17) in Flächenkontakt mit dem ersten Halter (22) ist und Kontaktflächen derselben mit einem Klebstoff miteinander verklebt sind,
eine zweite Fläche (35), die eine der Flächen des zweiten Prismas (18) ist, die das Laserlicht der zweiten Farbe (B) empfängt und weiter von der zweiten Lichtquelle (13) entfernt ist als die andere Fläche, parallel zu der dritten Richtung ist und einen Winkel von 45° in Bezug auf die erste und die zweite Richtung bildet, wobei die andere Fläche des zweiten Prismas (18) in Flächenkontakt mit dem zweiten Halter (23) ist und Kontaktflächen derselben mit einem Klebstoff miteinander verklebt sind,
eine dritte Fläche (36) des zweiten Prismas (18), die der zweiten Fläche (35) gegenüberliegt, parallel zu der dritten Richtung ist und einen Winkel von 45° in Bezug auf die erste und die zweite Richtung bildet,
eine vierte Fläche (37), die eine der Flächen des dritten Prismas (19) ist, die das Laserlicht der dritten Farbe (R) empfängt und weiter von der dritten Lichtquelle (15) entfernt ist als die andere Fläche, parallel zu der dritten Richtung ist und einen Winkel von 45° in Bezug auf die erste und die zweite Richtung bildet, wobei die andere Fläche des dritten Prismas (19) in Flächenkontakt mit dem dritten Halter (24) ist und Kontaktflächen derselben mit einem Klebstoff miteinander verklebt sind,
die erste und die zweite Fläche (34, 35) mit einem Klebstoff an einen ersten Dünnfilm (20) angeklebt sind, der an der zweiten Fläche oder der ersten Fläche ausgebildet ist,
und der erste Film (20) das Laserlicht der ersten Farbe (G) durchlässt und das Laserlicht der zweiten Farbe (B) reflektiert, und
die dritte oder die vierte Fläche (36, 37) mit einem Klebstoff an einem zweiten Dünnfilm (21) angeklebt ist, der an der vierten oder der dritten Fläche ausgebildet ist,
und der zweite Film (21) des Laserlicht der ersten Farbe (G) sowie das Laserlicht der zweiten Farbe (B) durchlässt und das Laserlicht der dritten Farbe (R) reflektiert,
wobei die erste oder die zweite Fläche (34, 35) mit einem Klebstoff an einer Position an dem ersten Dünnfilm (20) angeklebt ist, an der eine Achse des Laserlichtes der ersten Farbe (G) mit einer Achse des Laserlichtes der zweiten Farbe (B) übereinstimmt; und
die dritte oder die vierte Fläche (36, 37) mit einem Klebstoff an dem zweiten Dünnfilm (21) an einer Position angeklebt ist, an der die Achse des Laserlichtes der ersten Farbe (G) und die Achse des Laserlichtes der zweiten Farbe (B) mit einer Achse des Laserlichtes der dritten Farbe (R) übereinstimmen.

2. Verfahren zum Einstellen der optischen Achse für einen Projektor, der Laserlicht einer ersten Farbe (G), einer zweiten Farbe (B) und einer dritten Farbe (R) projiziert, wobei der Projektor (5) enthält:
eine erste optische Einheit (31), die integral eine erste Lichtquelle (11), die das Laserlicht der ersten Farbe (G) emittiert, und ein erstes Prisma (17) aufweist, das das von der ersten Lichtquelle (11) emittierte Laserlicht der ersten Farbe (G) empfängt, wobei ein erster Halter (22) und die erste Lichtquelle (11) in Flächenkontakt miteinander sind und Kontaktflächen derselben mit einem Klebstoff miteinander verklebt sind;
eine zweite optische Einheit (32), die integral eine zweite Lichtquelle (13), die das Laserlicht der zweiten Farbe (B) emittiert, und ein zweites Prisma (18) aufweist, das das von der zweiten Lichtquelle (B) emittierte Laserlicht der zweiten Farbe (B) empfängt, wobei ein zweiter Halter (23) und die zweite Lichtquelle (13) in Flächenkontakt miteinander sind und Kontaktflächen derselben mit einem Klebstoff miteinander verklebt sind; sowie
eine dritte optische Einheit (33), die integral eine dritte Lichtquelle (15), die das Laserlicht der dritten Farbe (R) emittiert, und ein drittes Prisma (19) aufweist, das das von der dritten Lichtquelle (15) emittierte Laserlicht der dritten Farbe (R) empfängt, wobei ein dritter Halter (24) und die dritte Lichtquelle (15) in Flächenkontakt miteinander sind und Kontaktflächen derselben mit einem Klebstoff miteinander verklebt sind; und wobei
eine erste Fläche (34), die eine der Flächen des ersten Prismas (17) ist, die das Laserlicht der ersten Farbe (G) empfängt und weiter von der ersten Lichtquelle (11) entfernt ist als die andere Fläche, einen Winkel von 45° in Bezug auf eine Emissionsrichtung des Laserlichtes der ersten Farbe (G) bildet, wobei die andere Fläche des ersten Prismas (17) in Flächenkontakt mit dem ersten Halter (22) ist und Kontaktflächen derselben mit einem Klebstoff miteinander verklebt sind,
eine zweite Fläche (35), die eine der Flächen des zweiten Prismas (18) ist, die das Laserlicht der zweiten Farbe (B) empfängt und weiter von der zweiten Lichtquelle (13) entfernt ist als die andere Fläche, einen Winkel von 45° in Bezug auf eine Emissionsrichtung des Laserlichtes der zweiten Quelle (B) bildet, wobei die andere Fläche des zweiten Prismas (18) in Flächenkontakt mit dem zweiten Halter (23) ist und Kontaktflächen derselben mit einem Klebstoff miteinander verklebt sind,
eine dritte Fläche (36) des zweiten Prismas (18), die der zweiten Fläche (35) gegenüberliegt, einen Winkel von 45° in Bezug auf die Emissionsrichtung des Laserlichtes der zweiten Farbe (B) bildet,
eine vierte Fläche (37), die eine der Flächen des dritten Prismas (19) ist, die das Laserlicht der dritten Farbe (R) empfängt und weiter von der dritten Lichtquelle (15) entfernt ist als die andere Fläche, einen Winkel von 45° in Bezug auf eine Emissionsrichtung des Laserlichtes der dritten Farbe (R) bildet, wobei die andere Fläche des dritten Prismas (19) in Flächenkontakt mit dem dritten Halter (24) ist und Kontaktflächen derselben mit einem Klebstoff miteinander verklebt sind,
wobei ein erster Dünnfilm (20), der das Laserlicht der ersten Farbe (G) durchlässt und das Laserlicht der zweiten Farbe (B) reflektiert, an der ersten Fläche (34) oder der zweiten Fläche (35) ausgebildet ist, und
ein zweiter Dünnfilm (21), der das Laserlicht der ersten Farbe (G) sowie das Laserlicht der zweiten Farbe (B) durchlässt und das Laserlicht der dritten Farbe (R) reflektiert, an der dritten Fläche (36) oder der vierten Fläche (37) ausgebildet ist; und
das Verfahren zum Einstellen der optischen Achse die folgenden Schritte umfasst:
Aufbringen eines ersten UV-härtbaren Klebstoffs (41) zwischen der ersten Fläche (34) des ersten Prismas (17) und dem ersten Dünnfilm (20) oder zwischen der zweiten Fläche (35) des zweiten Prismas (18) und dem ersten Dünnfilm (20);
Verschieben des ersten und des zweiten Prismas (17, 18) relativ zueinander, wobei das erste und das zweite Prisma (17, 18) dabei in Kontakt miteinander gehalten werden und sich der erste Dünnfilm (20) sowie der erste UV-härtbare Klebstoff (41) zwischen ihnen befinden, und Bestrahlen des ersten UV-härtbaren Klebstoffs (41) mit ultravioletten Strahlen, wenn eine Achse des Laserlichtes der ersten Farbe (G) mit einer Achse des Laserlichtes der zweiten Farbe (B) übereinstimmt;
Aufbringen eines zweiten UV-härtbaren Klebstoffs (42) zwischen der dritten Fläche (36) des zweiten Prismas (18) und dem zweiten Dünnfilm (21) oder zwischen der vierten Fläche (37) des dritten Prismas (19) und dem zweiten Dünnfilm (21); sowie
Verschieben des zweiten und des dritten Prismas (18, 19) relativ zueinander, wobei das zweite und das dritte Prisma (18, 19) dabei in Kontakt miteinander gehalten werden und sich der zweite Dünnfilm (21) und der zweite UV-härtbare Klebstoff (42) zwischen ihnen befinden, und Bestrahlen des zweiten UV-härtbaren Klebstoffs (42) mit ultravioletten Strahlen, wenn die Achse des Laserlichtes der ersten Farbe (G) und die Achse des Laserlichtes der zweiten Farbe (B) mit einer Achse des Laserlichtes der dritten Farbe (R) übereinstimmen.

## Revendications

1. Projecteur (5) projetant de la lumière laser d'une première couleur (G), d'une deuxième couleur (B) et d'une troisième couleur (R) et comprenant :
- une première unité de sortie de lumière (31) comportant de manière intégrale une première source lumineuse (11) émettant la lumière laser de ladite première couleur (G) dans une première direction et un premier prisme (17) recevant la lumière laser de la première couleur (G) émise depuis ladite première source lumineuse (11), dans lequel un premier support (22) et la première source lumineuse (11) sont en contact de surface l'un avec l'autre et leurs surfaces de contact adhérent ensemble par un adhésif ;
- une deuxième unité de sortie de lumière (32) comportant de manière intégrale une deuxième source lumineuse (13) émettant la lumière laser de ladite deuxième couleur (B) dans une deuxième direction perpendiculaire à la première direction et un deuxième prisme (18) recevant la lumière laser de la deuxième couleur (B) émise depuis ladite deuxième source lumineuse (13), dans lequel un deuxième support (23) et la deuxième source lumineuse (13) sont en contact de surface l'un avec l'autre et leurs surfaces de contact adhérent ensemble par un adhésif ; et
- une troisième unité de sortie de lumière (33) comportant de manière intégrale une troisième source lumineuse (15) émettant la lumière laser de ladite troisième couleur (R) dans la deuxième direction et un troisième prisme (19) recevant la lumière laser de la troisième couleur (R) émise depuis ladite troisième source lumineuse (15), dans lequel un troisième support (24) et la troisième source lumineuse (15) sont en contact de surface l'un avec l'autre et leurs surfaces de contact adhérent ensemble par un adhésif ;
- dans lequel :
- une première surface (34), étant une des surfaces dudit premier prisme (17), recevant la lumière laser de ladite première couleur (G) et étant plus éloignée de ladite première source lumineuse (11) que l'autre surface, est parallèle à une troisième direction perpendiculaire auxdites première et deuxième directions et forme un angle de 45 degrés par rapport auxdites première et deuxième directions, dans lequel l'autre surface du premier prisme (17) est en contact de surface avec le premier support (22) et leurs surfaces de contact adhérent ensemble par un adhésif ;
- une deuxième surface (35), étant une des surfaces dudit deuxième prisme (18), recevant la lumière laser de ladite deuxième couleur (B) et étant plus éloignée de ladite deuxième source lumineuse (13) que l'autre surface, est parallèle à ladite troisième direction et forme un angle de 45 degrés par rapport auxdites première et deuxième directions, dans lequel l'autre surface du deuxième prisme (18) est en contact de surface avec le deuxième support (23) et leurs surfaces de contact adhérent ensemble par un adhésif ;
- une troisième surface (36) dudit deuxième prisme (18), opposée à ladite deuxième surface (35), est parallèle à ladite troisième direction et forme un angle de 45 degrés par rapport auxdites première et deuxième directions ;
- une quatrième surface (37), étant une des surfaces dudit troisième prisme (19), recevant la lumière laser de ladite troisième couleur (R) et étant plus éloignée de ladite troisième source lumineuse (15) que l'autre surface, est parallèle à ladite troisième direction et forme un angle de 45 degrés par rapport auxdites première et deuxième directions, dans lequel l'autre surface du troisième prisme (19) est en contact de surface avec le troisième support (24) et leurs surfaces de contact adhérent ensemble par un adhésif ;
- ladite première ou deuxième surface (34, 35) adhère par un adhésif à un premier fil mince (20) ménagé sur ladite deuxième ou première surface ;
- ledit premier film (20) laisse passer la lumière laser de ladite première couleur (G) à travers celui-ci et réfléchit la lumière laser de ladite deuxième couleur (B) ;
- ladite troisième ou quatrième surface (36, 37) adhère par un adhésif à un deuxième film mince (21) ménagé sur ladite quatrième ou troisième surface ;
- et ledit deuxième film (21) laisse passer la lumière laser de ladite première couleur (G) et la lumière laser de ladite deuxième couleur (B) à travers celui-ci et réfléchit la lumière laser de ladite troisième couleur (R) ;
- dans lequel ladite première ou deuxième surface (34, 35) adhère par un adhésif audit premier fil mince (20) à une position telle qu'un axe de la lumière laser de ladite première couleur (G) coïncide avec un axe de la lumière laser de ladite deuxième couleur (B) ; et
- dans lequel ladite troisième ou quatrième surface (36, 37) adhère par un adhésif audit deuxième film mince (21) à une position telle que l'axe de la lumière laser de ladite première couleur (G) et l'axe de la lumière laser de ladite deuxième couleur (B) coïncident avec un axe de la lumière laser de ladite troisième couleur (R).

2. Procédé d'ajustement d'axe optique pour un projecteur projetant de la lumière laser d'une première couleur (G), d'une deuxième couleur (B) et d'une troisième couleur (R), pour lequel :
- ledit projecteur (5) comprend :
- une première unité optique (31) comportant de manière intégrale une première source lumineuse (11) émettant la lumière laser de ladite première couleur (G) et un premier prisme (17) recevant la lumière laser de la première couleur (G) émise depuis ladite première source lumineuse (11), pour lequel un premier support (22) et la première source lumineuse (11) sont en contact de surface l'un avec l'autre et leurs surfaces de contact adhérent ensemble par un adhésif ;
- une deuxième unité optique (32) comportant de manière intégrale une deuxième source lumineuse (13) émettant la lumière laser de ladite deuxième couleur (B) et un deuxième prisme (18) recevant la lumière laser de la deuxième couleur (B) émise depuis ladite deuxième source lumineuse (13), pour lequel un deuxième support (23) et la deuxième source lumineuse (13) sont en contact de surface l'un avec l'autre et leurs surfaces de contact adhérent ensemble par un adhésif ; et
- une troisième unité optique (33) comportant de manière intégrale une troisième source lumineuse (15) émettant la lumière laser de ladite troisième couleur (R) et un troisième prisme (19) recevant la lumière laser de la troisième couleur (R) émise depuis ladite troisième source lumineuse (15), pour lequel un troisième support (24) et la troisième source lumineuse (15) sont en contact de surface l'un avec l'autre et leurs surfaces de contact adhérent ensemble par un adhésif ;
- pour lequel :
- une première surface (34), étant une des surfaces dudit premier prisme (17), recevant la lumière laser de ladite première couleur (G) et étant plus éloignée de ladite première source lumineuse (11) que l'autre surface, forme un angle de 45 degrés par rapport à une direction d'émission de la lumière laser de ladite première couleur (G), pour lequel l'autre surface du premier prisme (17) est en contact de surface avec le premier support (22) et leurs surfaces de contact adhérent ensemble par un adhésif ;
- une deuxième surface (35), étant une des surfaces dudit deuxième prisme (18), recevant la lumière laser de ladite deuxième couleur (B) et étant plus éloignée de ladite deuxième source lumineuse (13) que l'autre surface, forme un angle de 45 degrés par rapport à une direction d'émission de la lumière laser de ladite deuxième couleur (B), pour lequel l'autre surface du deuxième prisme (18) est en contact de surface avec le deuxième support (23) et leurs surfaces de contact adhérent ensemble par un adhésif ;
- une troisième surface (36) dudit deuxième prisme (18), opposée à ladite deuxième surface (35), forme un angle de 45 degrés par rapport à la direction d'émission de la lumière laser de ladite deuxième couleur (B) ;
- une quatrième surface (37), étant une des surfaces dudit troisième prisme (19), recevant la lumière laser de ladite troisième couleur (R) et étant plus éloignée de ladite troisième source lumineuse (15) que l'autre surface, forme un angle de 45 degrés par rapport à une direction d'émission de la lumière laser de ladite troisième couleur (R), pour lequel l'autre surface du troisième prisme (19) est en contact de surface avec le troisième support (24) et leurs surfaces de contact adhérent ensemble par un adhésif ;
- un premier fil mince (20), laissant passer la lumière laser de ladite première couleur (G) à travers celui-ci et réfléchissant la lumière laser de ladite deuxième couleur (B), est ménagé sur ladite première surface (34) ou ladite deuxième surface (35) ; et
- un deuxième film mince (21), laissant passer la lumière laser de ladite première couleur (G) et la lumière laser de ladite deuxième couleur (B) à travers celui-ci et réfléchissant la lumière laser de ladite troisième couleur (R), est ménagé sur ladite troisième surface (36) ou ladite quatrième surface (37) ; et
- ledit procédé d'ajustement d'axe optique comprend les étapes consistant à :
- appliquer un premier adhésif durcissable aux UV (41) entre ladite première surface (34) dudit premier prisme (17) et ledit premier film mince (20) ou entre ladite deuxième surface (35) dudit deuxième prisme (18) et ledit premier film mince (20) ;
- faire glisser lesdits premier et deuxième prismes (17, 18) l'un relativement à l'autre tout en maintenant lesdits premier et deuxième prismes (17, 18) en contact l'un avec l'autre avec ledit premier film mince (20) et ledit premier adhésif durcissable aux UV (41) situé entre eux et irradier ledit premier adhésif durcissable aux UV (41) avec des rayons ultraviolets lorsqu'un axe de la lumière laser de ladite première couleur (G) coïncide avec un axe de la lumière laser de ladite deuxième couleur (B) ;
- appliquer un deuxième adhésif durcissable aux UV (42) entre ladite troisième surface (36) dudit deuxième prisme (18) et ledit deuxième film mince (21) ou entre ladite quatrième surface (37) dudit troisième prisme (19) et ledit deuxième film mince (21) ; et
- faire glisser lesdits deuxième et troisième prismes (18, 19) l'un relativement à l'autre tout en maintenant lesdits deuxième et troisième prismes (18, 19) en contact l'un avec l'autre avec ledit deuxième film mince (21) et ledit deuxième adhésif durcissable aux UV (42) situé entre eux et irradier ledit deuxième adhésif durcissable aux UV (42) avec des rayons ultraviolets lorsque l'axe de la lumière laser de ladite première couleur (G) et l'axe de la lumière laser de ladite deuxième couleur (B) coïncident avec un axe de la lumière laser de ladite troisième couleur (R).
